# EUROPÄISCHE PATENTANMELDUNG

(11) **EP 3 254 888 A1**
(43) Veröffentlichungstag der Anmeldung: **13.12.2017**
(21) Anmeldenummer: 16189701.2
(22) Anmeldetag: 20.09.2016
(51) Int. Cl.: B60N 2/12

(54) **FAHRZEUGSITZ MIT EINER EASY-ENTRY-FUNKTION**

(30) Priorität: 07.06.2016 DE 102016210035
(71) Anmelder: Adient Luxembourg Holding S.à r.l., 2453 Luxembourg (LU)
(72) Erfinder: Kreuels, Olaf, 66482 Zweibrücken (DE); Hammann, Heinrich, 67806 Teschenmoschel (DE); Dill, Thomas, 67699 Heiligenmoschel (DE); Wiege, Jakob, 67661 Kaiserslautern (DE); Enns, Viktor, 67663 Kaiserslautern (DE)
(74) Vertreter: Finger, Catrin

(57) **Zusammenfassung**

Die Erfindung betrifft einen Fahrzeugsitz (1) mit einer Easy-Entry-Funktion. Erfindungsgemäß weist der Fahrzeugsitz (1) einen belasteten Arretiermechanismus (4) zur Arretierung des Fahrzeugsitzes (1) in der Easy-Entry-Position (EEP) auf, wobei der Fahrzeugsitz (1) allein durch eine in Verschiebungsrichtung manuell einleitbare, rückwärtsgerichtete Kraft, welche größer als eine vorbestimmte Arretierkraft ist, aus der Easy-Entry-Position lösbar ist.

## Beschreibung

Die Erfindung betrifft einen Fahrzeugsitz mit einer Easy-Entry-Funktion.

Im Stand der Technik sind verschiedene Easy-Entry-Systeme bekannt, welche einen erleichterten Einstieg in eine zweite Sitzreihe eines Fahrzeugs ermöglichen. Das Easy-Entry-System ist durch einen Entriegelungshebel, welcher üblicherweise an einer Rückenlehne des Fahrzeugsitzes angeordnet ist, betätigbar, wodurch die Rückenlehne des Fahrzeugsitzes aus einem Einstiegsbereich in Richtung eines Sitzteils des Fahrzeugsitzes schwenkt. Ist der Fahrzeugsitz auf Schienen angeordnet, kann der Fahrzeugsitz bei Betätigung des Entriegelungshebels zusätzlich oder alternativ in Fahrtrichtung aus dem Einstiegsbereich heraus in Richtung eines Fahrzeugfrontbereichs verschiebbar sein.

Aufgabe der vorliegenden Erfindung ist es, einen gegenüber dem Stand der Technik verbesserten Fahrzeugsitz mit einer Easy-Entry-Funktion anzugeben.

Die Aufgabe wird erfindungsgemäß mit einem Fahrzeugsitz mit einer Easy-Entry-Funktion gemäß der in Anspruch 1 angegebenen Merkmalskombination gelöst.

Ein Fahrzeugsitz weist eine Easy-Entry-Funktion auf. Erfindungsgemäß ist ein federbelasteter Arretiermechanismus zur Arretierung des Fahrzeugsitzes in der Easy-Entry-Position vorgesehen, wobei der Fahrzeugsitz allein durch eine in Verschiebungsrichtung manuell einleitbare, rückwärtsgerichtete Kraft, welche größer als eine vorbestimmte Arretierkraft ist, aus der Easy-Entry-Position lösbar ist. Das heißt, dass bei Arretierung des Fahrzeugsitzes in der Easy-Entry-Position ein Verschieben des Fahrzeugsitzes nach hinten unterbunden ist, solange eine manuell eingeleitete, in Verschiebungsrichtung rückwärtsgerichtete Kraft nicht größer ist als eine vorbestimmte Arretierkraft.

Der federbelastete Arretiermechanismus ermöglicht damit eine Komfortverriegelung des Fahrzeugsitzes, einen sogenannten Softlock, und ist durch Aufwenden einer Kraft, welche größer als eine Arretierkraft (Softlock-Kraft) ist, aus der Easy-Entry-Position lösbar, also nach hinten verschiebbar.

Mittels des derart ausgebildeten Fahrzeugsitzes ist der Fahrzeugsitz in der Easy-Entry-Position arretierbar, so dass der Einstieg in das Fahrzeug gegenüber konventionellen Fahrzeugsitzen erheblich verbessert ist. Mit anderen Worten: Der Fahrzeugsitz verbleibt in der Easy-Entry-Position ohne zusätzliche Maßnahmen, wie beispielsweise ein Festhalten des Fahrzeugsitzes. Die Arretierung des Fahrzeugsitzes in der Easy-Entry-Position erfolgt nach Längsverschiebung des Fahrzeugsitzes automatisch. Die Lösung des Arretiermechanismus kann dabei in vorteilhafter Art und Weise ohne eine zusätzliche Entriegelungsfunktion erfolgen.

Eine Ausgestaltung des erfindungsgemäßen Fahrzeugsitzes sieht vor, dass der Arretiermechanismus eine Feder umfasst, die zur Arretierung des Fahrzeugsitzes in der Easy-Entry-Position ein Arretierelement arretiert. Der Arretiermechanismus ist dadurch strukturell besonders einfach gebildet.

Dabei ist die Feder bevorzugt eine Blattfeder, insbesondere eine Blattfeder aus Metall. Ein derartiger Arretiermechanismus ist besonders ermüdungsarm.

Dabei weist die Blattfeder besonders bevorzugt einen geradlinig verlaufenden Abschnitt, daran anschließend eine Rastausformung, daran anschließend einen abgewinkelten Abschnitt und einen daran anschließenden rampenförmigen Abschnitt auf. Eine derartige Blattfeder erlaubt eine besonders einfache und leichtgängige automatische Arretierung des Fahrzeugsitzes in der Easy-Entry-Position, insbesondere wenn die Neigung des rampenförmigen Abschnitts kleiner als eine gegenläufige Neigung des abgewinkelten Abschnitts ist. Dadurch ist die Überführung des Fahrzeugsitzes in die Easy-Entry-Position leichter als das Lösen des Fahrzeugsitzes aus der Easy-Entry-Position. Bevorzugt ist die Neigung des rampenförmigen Abschnitts kleiner als 45 , besonders bevorzugt kleiner als 30°.

Eine weitere Ausgestaltung des erfindungsgemäßen Fahrzeugsitzes sieht vor, dass ein stirnseitiges Ende des rampenförmigen Abschnitts oberhalb einer Oberkante des Arretierelements angeordnet ist. Dadurch ist eine Überführung des Fahrzeugsitzes in die Easy-Entry-Position besonders einfach möglich. Dadurch, dass eine Übergangsstelle zwischen abgewinkeltem Abschnitt und rampenförmigem Abschnitt unterhalb der Oberkante des Arretierelements angeordnet ist, ist eine sichere Arretierung des Fahrzeugsitzes in der Easy-Entry-Position besonders einfach möglich, wobei die zum Lösen des Arretiermechanismus zu überwindende Arretierkraft besonders einfach vorbestimmbar ist.

Eine andere Ausgestaltung des erfindungsgemäßen Fahrzeugsitzes sieht vor, dass der geradlinig verlaufende Abschnitt parallel zu einer Längsverschieberichtung des Fahrzeugsitzes, also parallel zu dessen Schienensystem, angeordnet ist. Der Arretiermechanismus ist dadurch strukturell besonders einfach und damit kostengünstig gebildet.

Dabei ist der geradlinig verlaufende Abschnitt besonders bevorzugt in einer horizontalen Ebene angeordnet. Ein Zusammenwirken mit dem Arretierelement ist dadurch besonders einfach ermöglicht, wobei das Arretierelement dabei auf einfache Weise an einer Unterschiene des Schienensystems horizontal anordbar ist.

Eine andere Ausgestaltung des erfindungsgemäßen Fahrzeugsitzes sieht vor, dass das Arretierelement ein Bolzen ist. Ein Bolzen ist einerseits strukturell besonders einfach und damit kostengünstig und andererseits im Zusammenwirken mit der Feder besonders verschleißarm.

Das Arretierelement ist gemäß einer weiteren Ausgestaltung des erfindungsgemäßen Fahrzeugsitzes fest an einer fahrzeugfesten Unterschiene angeordnet und die Feder ist dabei fest an einem Sitzteil, bevorzugt an einer Oberschiene des Fahrzeugsitzes angeordnet. Besonders bevorzugt ist dabei die Feder fest an einer Oberschiene angeordnet. Herstellung und Betrieb des Arretiermechanismus sind dadurch besonders vereinfacht.

Eine andere Ausgestaltung des erfindungsgemäßen Fahrzeugsitzes sieht vor, dass die Feder und das Arretierelement derart angeordnet sind, dass bei Arretierung des Fahrzeugsitzes in der Easy-Entry-Position ein Verschieben des Fahrzeugsitzes nach vorn durch ein Anschlagelement unterbunden ist. Dadurch ist auf einfache Weise sichergestellt, dass der Fahrzeugsitz in der Easy-Entry-Position nicht nur durch den Arretiermechanismus gegen Verschieben nach hinten, sondern durch das Anschlagelement auch gegen Verschieben nach vorn gesichert ist. Eine derartige, in beide Richtungen gesicherte Fixierung des Fahrzeugsitzes wird als besonders angenehm empfunden, wobei der Arretiermechanismus besonders einfach auszugestalten ist, da dieser eine ungewollte Verschiebung in lediglich eine Richtung bewirken muss.

Die Feder ist bevorzugt aus Metall gebildet. Dadurch ist der Arretiermechanismus mit vergleichsweise geringem Platzbedarf ausbildbar und besonders ermüdungsarm.

Eine andere Ausgestaltung des erfindungsgemäßen Fahrzeugsitzes sieht vor, dass die Rastausformung und/oder zumindest ein Teilbereich des abgewinkelten Abschnitts eine mit dem Arretierelement korrespondierende Form aufweisen. Beispielsweise ist die Rastausformung kreisbogenförmig und korrespondiert in ihrer Form mit einem als Rundbolzen ausgebildetem Arretierelement.

Die Feder ist beispielsweise an der Oberschiene befestigt und weist die Rastausformung zur Aufnahme des Arretierelements auf. Die Rastausformung kann beispielsweise mittels eines abgewinkelten freien Endes der Feder, insbesondere wenn diese als eine Blattfeder ausgeführt ist, ausgebildet sein. Die Feder ist dabei derart ausgebildet, dass diese sich parallel zu einer Längsrichtung der Schienen erstreckt (geradlinig verlaufender Abschnitt) und ein freies Ende abgewinkelt ist. Das abgewinkelte, freie Ende ist dabei in zwei Abschnitte unterteilt, wobei ein dem geradlinig verlaufenden Abschnitt zugewandter Abschnitt in einem Winkel von beispielsweise 70° bis 90° zum geradlinigen Abschnitt verläuft. Ein dem geradlinig verlaufenden Abschnitt abgewandter Abschnitt verläuft rampenförmig nach oben, d. h. in Richtung des Sitzteils des Fahrzeugsitzes.

Das freie Ende der Feder ist dem Arretierelement zugewandt, wobei diese in Längsrichtung der Schienen zueinander beabstandet sind, wenn der Fahrzeugsitz nicht in der Easy-Entry-Position ist. Wird der Fahrzeugsitz in die Easy-Entry-Position bewegt, bewegt sich die Oberschiene relativ zur Unterschiene und damit die Feder relativ zum Arretierelement. Erreicht die Feder das Arretierelement, drückt das Arretierelement den rampenförmigen Abschnitt der Feder nach oben, bis das Arretierelement in der Rastausformung angeordnet und damit eingerastet ist. Der Fahrzeugsitz ist nun automatisch in der Easy-Entry-Position arretiert.

Zum Lösen des Arretiermechanismus kann der Fahrzeugsitz auf einfache Art und Weise in Richtung eines Fahrzeugheckbereichs bewegt werden, wobei eine manuell einzuleitende Verschiebekraft erforderlich ist, die größer als die Arretierkraft ist. Die Arretierkraft ist hierbei abhängig von einer Ausformung und Materialeigenschaften der Feder.

Ausführungsbeispiele der Erfindung werden anhand von Zeichnungen näher erläutert. Dabei zeigen:
- Figur 1: schematisch eine ausschnittsweise perspektivische Darstellung eines Fahrzeugsitzes mit einem Arretiermechanismus,
- Figur 2: schematisch einen zugehörigen vergrößerten Ausschnitt mit einem nicht arretierten Arretiermechanismus,
- Figur 3: schematisch eine perspektivische Darstellung eines Fahrzeugsitzes in einer Easy-Entry-Position und
- Figur 4: schematisch einen zugehörigen vergrößerten Ausschnitt mit einem arretierten Arretiermechanismus.

Einander entsprechende Teile sind in allen Figuren mit den gleichen Bezugszeichen versehen.

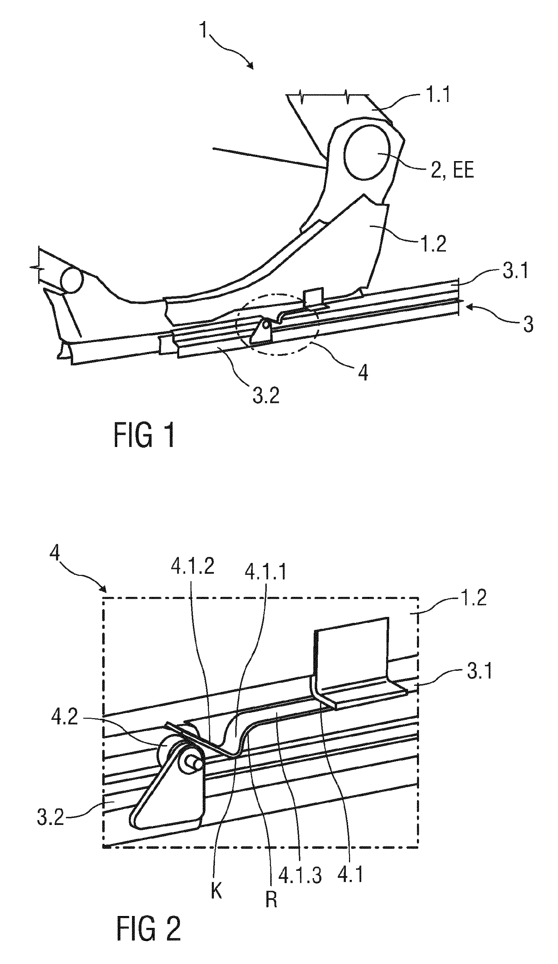

Figur 1 zeigt schematisch in perspektivischer Darstellung einen Teil eines Fahrzeugsitzes 1 mit einem Lehnenteil 1.1 und einem Sitzteil 1.2 im Bereich eines Beschlags 2, wobei das Lehnenteil 1.1 mittels des Beschlags 2 drehbar am Sitzteil 1.2 angeordnet ist.

Der Fahrzeugsitz 1 ist beispielsweise ein Vordersitz oder ein Fahrzeugsitz einer hinteren, beispielsweise einer zweiten Sitzreihe für ein nicht näher dargestelltes Fahrzeug und umfasst ein Schienensystem 3, wodurch der Fahrzeugsitz 1 in Längsrichtung des Fahrzeuges verschiebbar ist.

Zur Längsverstellung weist das Schienensystem 3 eine Oberschiene 3.1 und eine Unterschiene 3.2 auf. Die Oberschiene 3.1 ist direkt oder indirekt mit dem Sitzteil 1.2 verbunden und die Unterschiene 3.2 ist fahrzeugfest an einer Karosserie des Fahrzeuges angeordnet. Die Oberschiene 3.1 ist dabei längsverschieblich zur Unterschiene 3.2.

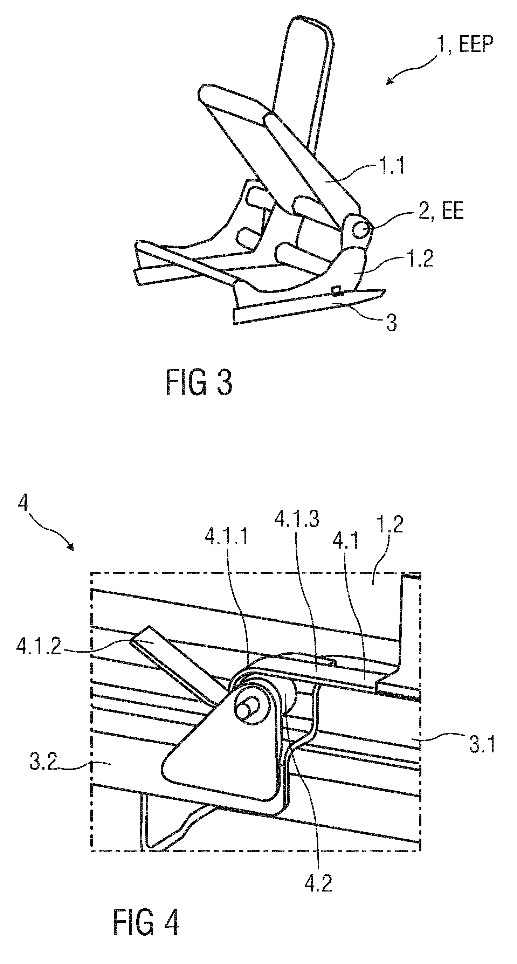

Um einen Einstieg in einen Fondbereich oder eine hintere Sitzreihe des Fahrzeuges zu vereinfachen, weist der Fahrzeugsitz 1 eine mittels eines Easy-Entry-Systems EE des Beschlags 2 realisierbare Easy-Entry-Funktion auf. Durch Betätigen eines nicht näher dargestellten Easy-Entry-Betätigungshebels wird der Beschlag 2 entriegelt und das Lehnenteil 1.1 entgegen dem Uhrzeigersinn von einer Sitzposition zu einer Easy-Entry-Position EEP (siehe Figur 3) nach vorn geschwenkt. Des Weiteren wird der Fahrzeugsitz 1 zum Erreichen der Easy-Entry-Position EEP in Längsrichtung des Fahrzeuges insbesondere manuell nach vorn bewegt.

Zur Arretierung des Fahrzeugsitzes 1 in der Easy-Entry-Position EEP ist ein Arretiermechanismus 4 vorgesehen, welcher eine Komfortverriegelung des Fahrzeusitzes 1, einen sogenannten Softlock, ermöglicht. Der Arretiermechanismus 4 hat dabei die Funktion, dass beim manuellen Zurückfahren in eine Fahrposition aus der Easy-Entry-Position EEP lediglich eine definierte, also vorbestimmte Arretierkraft (Softlock-Kraft) überwunden werden muss, ohne dass zusätzliche Entriegelungsmaßnahmen erforderlich sind.

Der Arretiermechanismus 4 wird im Folgenden näher erläutert, wobei der in Figur 1 durch einen Kreis gekennzeichnete Ausschnitt den Arretiermechanismus 4 umfasst und in Figur 2 größer und detaillierter dargestellt ist.

Figur 2 zeigt eine beispielhafte Ausführungsform des Arretiermechanismus 4, welcher eine Feder 4.1 und ein Arretierelement 4.2 aufweist, die in Wirkverbindung miteinander stehen.

Die Feder 4.1 ist hierbei als eine Blattfeder ausgebildet, deren Längsausdehnung parallel zu einer Längsausrichtung der Schienen 3.1, 3.2 verläuft. Die Feder 4.1 ist vorzugsweise aus einem elastischen, mechanisch stabilen Material, z. B. aus Metall, insbesondere aus Federstahl, gebildet und ist mit der Oberschiene 3.1 fest verbunden. Beispielsweise ist die Feder 4.1 mit einem Ende über ein Halteblech mit der Oberschiene 3.1 stoffschlüssig verbunden, insbesondere verschweißt. Alternativ kann die Feder 4.1 auch kraftschlüssig mit der Oberschiene 3.1 verbunden sein, z. B. ist die Feder 4.1 über das Halteblech mit der Oberschiene 3.1 vernietet.

Ein anderes Ende der Feder 4.1 ist als ein freies Ende ausgebildet und weist einen abgewinkelten Abschnitt 4.1.1 und einen rampenförmigen Abschnitt 4.1.2 auf. Der abgewinkelte Abschnitt 4.1.1 ist einem geradlinig verlaufenden Abschnitt 4.1.3 zugewandt und verläuft zu diesem in einem Winkel von beispielsweise 90°. Mittels des abgewinkelten Abschnitts 4.1.1 wird eine Rastausformung R gebildet, die einer rastenden Anordnung des Arretierelements 4.2 dient (siehe Figur 4). Der rampenförmige Abschnitt 4.1.2 ist dem geradlinig verlaufenden Abschnitt 4.1.3 abgewandt und verläuft schräg nach oben, d. h. in Richtung des Sitzteils 1.2. Ein Übergang zwischen dem abgewinkelten Abschnitt 4.1.1 und dem rampenförmigen Abschnitt 4.1.2 bildet einen für das Arretierelement 4.2 zu überwindenden Knickpunkt K, um in der Rastausformung R einzurasten.

Der rampenförmige Abschnitt 4.1.2 ist dem Arretierelement 4.2 zugewandt, wobei diese in Längsrichtung der Schienen 3.1, 3.2 zueinander beabstandet sind, wenn der Fahrzeugsitz 1 nicht in der Easy-Entry-Position EEP ist, wie es Figur 2 beispielhaft zeigt. Das Arretierelement 4.2 ist ein zylindrisches Element, z. B. ein Bolzen, dessen Längsausrichtung horizontal und rechtwinklig gegenüber den Schienen 3.1, 3.2 verläuft. Das Arretierelement 4.2 ist fest mit der Unterschiene 3.2 verbunden. Dabei kann das Arretierelement 4.2 entweder direkt oder indirekt über eine Haltekonstruktion mit der Unterschiene 3.2 verbunden sein. Beispielsweise ist das Arretierelement 4.2 über eine Haltekonstruktion mit der Unterschiene 3.2 kraftschlüssig verbunden, z. B. vernietet.

Wird der Fahrzeugsitz 1 in die Easy-Entry-Position EEP bewegt, bewegt sich die Oberschiene 3.1 in Längsrichtung relativ zur Unterschiene 3.2 nach vorn, wodurch die Feder 4.1 auf das Arretierelement 4.2 zubewegt wird. Erreicht die Feder 4.1 das Arretierelement 4.2, drückt das Arretierelement 4.2 den rampenförmigen Abschnitt 4.1.2 der Feder 4.1 nach oben, bis das Arretierelement 4.2 den Knickpunkt K überwindet und hinter diesem in der Rastausformung R einrastet. Der Fahrzeugsitz 1 ist nun in der Easy-Entry-Position EEP arretiert, wie es Figur 4 beispielhaft zeigt.

Zum Lösen des Arretiermechanismus 4 kann der Fahrzeugsitz 1 auf einfache Art und Weise längs in Richtung eines Fahrzeugheckbereichs bewegt werden, wobei eine Verschiebekraft erforderlich ist, die größer als die Arretierkraft (Softlock-Kraft) ist. Die Arretierkraft ist hierbei abhängig von einer Ausformung und Materialeigenschaften der Feder 4.1. Bei Einleitung der manuellen Kraft in den Fahrzeugsitz, um dieses aus der Easy-Entry-Position EEP zu lösen, wird die Feder 4.1 zunächst nach oben gebogen, wodurch sich die jeweiligen Neigungen oder Krümmungen der Abschnitte der Feder 4.1 bei größer werdender Kraft ändern. Insbesondere ändert sich auch die Neigung des abgewinkelten Abschnittes 4.1.1 von beispielsweise 90° auf beispielsweise 80°, so dass ein Zurückschieben der Feder 4.1 gegenüber dem Arretierelement 4.2 ermöglicht ist. Die genannte Änderung der Neigung ist beispielsweise dadurch vereinfacht, dass ein Radius der Rastausformung R größer ist als ein Durchmesser des Bolzens, der das Arretierelement 4.2 bildet.

Figur 3 zeigt zwei Fahrzeugsitze 1 einer Fahrzeugsitzreihe, wobei einer der Fahrzeugsitze 1 in der Easy-Entry-Position EEP angeordnet ist.

Figur 4 zeigt den Ausschnitt gemäß Figur 2, wobei das Arretierelement 4.2 in der Rastausformung R rastend angeordnet und der Fahrzeugsitz 1 somit in der Easy-Entry-Position EEP arretiert ist.

### Bezugszeichenliste

- 1: Fahrzeugsitz
- 1.1: Lehnenteil
- 1.2: Sitzteil
- 2: Beschlag
- 3: Schienensystem
- 3.1: Oberschiene
- 3.2: Unterschiene
- 4: Arretiermechanismus
- 4.1: Feder
- 4.1.1: abgewinkelter Abschnitt
- 4.1.2: rampenförmiger Abschnitt
- 4.1.3: geradlinig verlaufender Abschnitt
- 4.2: Arretierelement

- EE: Easy-Entry-System
- EEP: Easy-Entry-Position
- K: Knickpunkt
- R: Rastausformung

## Patentansprüche

1. Fahrzeugsitz (1) mit einer Easy-Entry-Funktion,
**gekennzeichnet durch** einen federbelasteten Arretiermechanismus (4) zur Arretierung des Fahrzeugsitzes (1) in der Easy-Entry-Position (EEP), wobei der Fahrzeugsitz (1) allein **durch** eine in Verschiebungsrichtung manuell einleitbare, rückwärtsgerichtete Kraft, welche größer als eine vorbestimmte Arretierkraft ist, aus der Easy-Entry-Position lösbar ist.

2. Fahrzeugsitz (1) nach Anspruch 1, **dadurch gekennzeichnet,**
**dass** der Arretiermechanismus (4) eine Feder (4.1) umfasst, die zur Arretierung des Fahrzeugsitzes (1) in der Easy-Entry-Position (EEP) ein Arretierelement (4.2) arretiert.

3. Fahrzeugsitz (1) nach Anspruch 2, **dadurch gekennzeichnet,**
**dass** die Feder (4.1) eine Blattfeder ist.

4. Fahrzeugsitz (1) nach Anspruch 3, **dadurch gekennzeichnet,**
**dass** die Feder (4.1) einen geradlinig verlaufenden Abschnitt (4.1.3), daran anschließend eine Rastausformung (R), daran anschließend einen abgewinkelten Abschnitt (4.1.1) und einen daran anschließenden rampenförmigen Abschnitt (4.1.2) aufweist.

5. Fahrzeugsitz (1) nach Anspruch 4, **dadurch gekennzeichnet,**
**dass** die Neigung des rampenförmigen Abschnitts (4.1.2) kleiner als eine gegenläufige Neigung des abgewinkelten Abschnitts (4.1.1) ist.

6. Fahrzeugsitz (1) nach Anspruch 4 oder 5, **dadurch gekennzeichnet,**
**dass** ein stirnseitiges Ende des rampenförmigen Abschnitts 4.1.2 oberhalb einer Oberkante des Arretierelements (4.2) angeordnet ist und dass eine Übergangsstelle zwischen abgewinkeltem Abschnitt (4.1.1) und rampenförmigem Abschnitt (4.1.2) unterhalb der Oberkante des Arretierelements (4.2) angeordnet ist.

7. Fahrzeugsitz (1) nach Anspruch 4, 5 oder 6, **dadurch gekennzeichnet,**
**dass** der geradlinig verlaufende Abschnitt (4.1.3) parallel zu einer Längsverschieberichtung des Fahrzeugsitzes (1) angeordnet ist.

8. Fahrzeugsitz (1) nach einem der Ansprüche 4 bis 7, **dadurch gekennzeichnet,**
**dass** der geradlinig verlaufende Abschnitt (4.1.3) in einer horizontalen Ebene angeordnet ist.

9. Fahrzeugsitz (1) nach einem der Ansprüche 2 bis 8, **dadurch gekennzeichnet,**
**dass** das Arretierelement (4.2) ein Bolzen ist.

10. Fahrzeugsitz (1) nach einem der Ansprüche 2 bis 9, **dadurch gekennzeichnet,**
**dass** das Arretierelement (4.2) fest an einer fahrzeugfesten Unterschiene (3.1) angeordnet ist und dass die Feder (4.1) fest an einem Sitzteil (1.2) angeordnet ist.

11. Fahrzeugsitz (1) nach Anspruch 10, **dadurch gekennzeichnet,**
**dass** die Feder (4.1) fest an einer Oberschiene (3.1) angeordnet ist.

12. Fahrzeugsitz (1) nach einem der Ansprüche 2 bis 11, **dadurch gekennzeichnet,**
**dass** die Feder (4.1) und das Arretierelement (4.2) derart angeordnet sind, dass bei Arretierung des Fahrzeugsitzes (1) in der Easy-Entry-Position (EEP) ein Verschieben des Fahrzeugsitzes (1) nach vorn durch ein Anschlagelement unterbunden ist.

13. Fahrzeugsitz (1) nach einem der vorhergehenden Ansprüche, **dadurch gekennzeichnet,**
**dass** die Feder (4.1) aus Metall gebildet ist.

14. Fahrzeugsitz (1) nach einem der Ansprüche 4 bis 13, **dadurch gekennzeichnet,**
**dass** die Rastausformung (R) und/oder zumindest ein Teilbereich des abgewinkelten Abschnitts (4.1.1) eine mit dem Arretierelement (4.2) korrespondierende Form aufweisen.
